# EUROPEAN PATENT SPECIFICATION

(11) **EP 0 332 961 B1**
(45) Date of publication and mention of the grant of the patent: **07.01.1993**
(21) Application number: 89103852.3
(22) Date of filing: 04.03.1989
(51) Int. Cl.: F16H 3/16

(54) **Auxiliary transmission input section**
Zusatzgetriebe-Eingangseinheit
Transmission auxiliaire en tant qu'unité d'entrée

(30) Priority: 14.03.1988 US 167944; 14.03.1988 US 168030
(43) Date of publication of application: 20.09.1989
(73) Proprietor: EATON CORPORATION, Cleveland Ohio 44114 (US)
(72) Inventor: Braun, Eugene Ralph, Royal Oak Michigan 48073 (US)
(74) Representative: Rüger, Rudolf, Dr.-Ing.

(56) References cited:
- EP-A- 0 226 347
- FR-A- 2 503 307
- US-A- 2 886 982
- US-A- 3 741 035
- US-A- 4 485 692

## Description

### BACKGROUND OF THE INVENTION

### Field of the Invention

The present invention relates to a compound change gear vehicular transmission having an input auxiliary section, preferably of the splitter type, connected in series with a mechanical main transmission section, preferably of the synchronized type. In particular, the present invention relates to a compound change gear transmission having an input auxiliary section utilizing selectively and modulatably engagable and disengagable friction clutches having an input non-disengagably drivingly mechanically connected to the vehicle prime mover whereby the auxiliary section friction clutches, in addition to allowing auxiliary section gear changing, provide the engagement/disengagement functions of a master clutch.

### Description of the Prior Art

Compound mechanical transmissions of the input splitter type and compound transmissions utilizing input auxiliary sections having friction clutch devices are known in the art as may be seen by reference to U.S. Patents No. US-A-4 485 692; 2 886 982 and 3 741 035.

Automatic and semi-automatic transmission and clutch controls are known in the prior art as may be seen by reference to U.S. Patents Nos. US-A-4 648 290; 4 361 060 and 4 081 065.

Synchronized mechanical change gear transmissions and transmission sections are well known in the prior art as may be seen by reference to U.S. Patents Nos. US-A-4 432 251; 4 373 403 and 4 018 319.

While compound mechanical (i.e. engaging ratios by means of positive clutches) change gear transmissions having input auxiliary sections of the splitter type and/or using friction clutches are know, such transmissions have required the use of a disconnect member, such as a master clutch or torque converter, between the transmission and prime move and/or have been of a relatively high inertia resulting in more difficult and/or higher energy synchronization of the main transmission section.

### SUMMARY OF THE INVENTION

In accordance with the present invention, the drawbacks of the prior art are minimized or overcome by the provision of a compound vehicular transmission comprising an input auxiliary section, preferably of the splitter type, connected in series between the vehicle engine and the mechanical main transmission section, preferably a synchronized type transmission section. The auxiliary input section utilizes a friction clutch, preferably a liquid lubricated and/or cooled friction clutch having an input that is nondisengagably mechanically connected to the engine. The auxiliary section friction clutch has at least two selectable engaged positions for selection of one of two selectable input ratios and a selectable disengaged position. By moving the auxiliary section friction clutch between its selected engaged position and the disengaged position, the torque break function of a master clutch is provided.

The auxiliary section friction clutch is positioned by either the controller of an automatic/semi-automatic transmission system or by an electrical/mechanical actuator responsive to manual transmission and clutch control devices. Preferably, a mechanical disconnect, such as a jaw clutch, is provided between the auxiliary input section friction elements and the main transmission section input to allow the rotational inertia of the main transmission section input to be minimized for easier, quicker, lower energy synchronization of the main transmission section during a main transmission section ratio change.

Accordingly, it is an object of the present invention to provide a new and improved compound transmission having an input auxiliary section utilizing selectively engaged/disengaged friction clutch means and drivingly mechanically nondisengagably connected to a prime mover.

This and other objects and advantages of the present invention will become apparent from a reading of the detailed description of the preferred embodiments taken in connection with the attached drawings.

### BRIEF DESCRIPTION OF THE DRAWINGS

Figure 1 is a schematic illustration of an automatic or semi-automatic mechanical transmission system utilizing the auxiliary transmission input section of the present invention.

Figure 2 is a schematic illustration of a manually controlled transmission system utilizing the auxiliary transmission input section of the present invention.

Figure 3 is an enlarged schematic illustration of the auxiliary transmission input section of the present invention.

Figure 4 is a schematic illustration of the shift pattern of the transmission illustrated in Figure 2.

Figure 5 is a sectional view of the auxiliary transmission input section of the present invention.

### DESCRIPTION OF THE PREFERRED EMBODIMENT

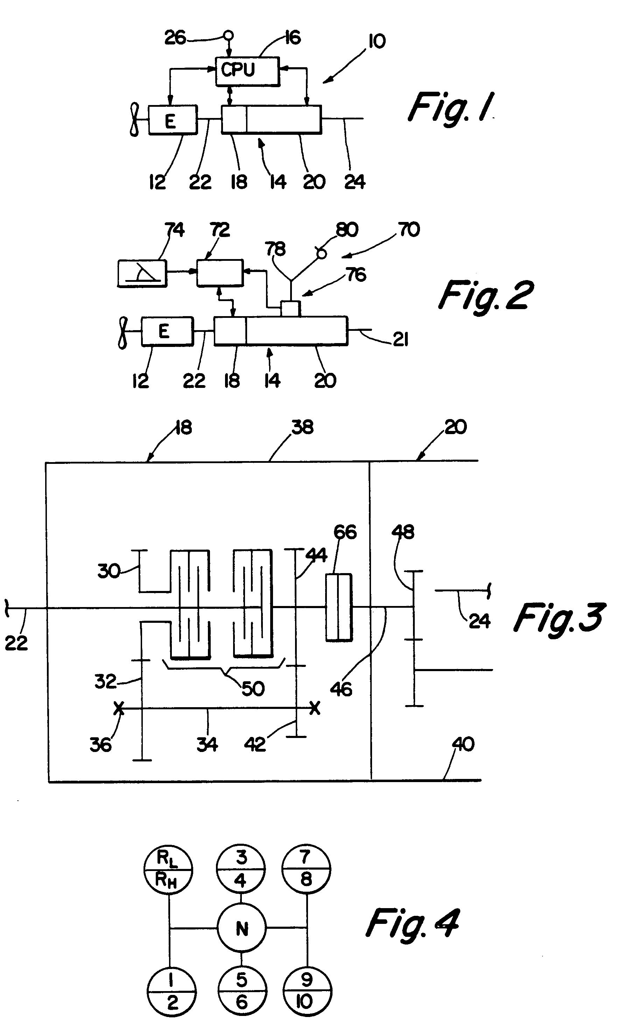

Certain terminology will be used in the following description for convenience and reference only and will not be limiting. The words "upperly", "downwardly", "rightwardly" and "leftwardly" will designate directions in the drawings to which reference is made. The words "forward" and "rearward" will refer respectively to the front and rear end of the transmission as same as conventionally mounted in the vehicle, being respectively from left to right sides of the transmission as illustrated in Figure 1. The words "inwardly" and "outwardly" will refer to directions toward and away from, respectively, being the geometric center of the device and designated parts thereof. Said terminology will include the words above specifically mentioned, derivatives thereof and words with similar import.

The term "compound transmission" is used to designate a transmission having a main transmission section and an auxiliary transmission section connected in series whereby the selected gear reduction in the main transmission section may be compounded by further selected gear reduction in the auxiliary transmission portion. The term "input auxiliary section" is used to designate auxiliary transmission section connected in series between the vehicular prime mover, such as a vehicle engine, and the input to the main transmission section. The term "splitter type compound transmission" as used herein will designate the compound transmission wherein the auxiliary transmission is used to provide various selectable steps for subdivisions of the gear ratio selected in the main transmission section. In a splitter type compound transmission, the main transmission section is typically provided with relatively wide ratio steps which are split or subdivided by the splitter type auxiliary transmission section. Splitter type compound transmissions are well known in the prior art and examples thereof may be seen by to reference to the above-mentioned United States Patent Nos. US-A-4 485 692 and 3 741 035 and by reference to European Patent No. EP-A-0071353.

The term "synchronized transmission section" shall designate a change gear transmission section wherein a selected gear is non-rotatably coupled to a shaft by means of a positive clutch, attempted engagement of said clutch is prevented until the members of said clutch are rotating at a substantially synchronous rotational speed and frictional means associated with the clutch members are sufficient, upon the initiation of a clutch engagement, to cause the clutch members, and all members rotating therewith, to rotate at a substantially synchronous speed of rotation.

An automatic/semi-automatic mechanical transmission system 10 utilizing the auxiliary input section of the present invention may be seen by reference to Figure 1. Briefly, a vehicular prime mover such as engine 12 is drivingly coupled to compound change gear transmission 14 which comprises an input auxiliary transmission section 18 connected in series with mechanical change gear main transmission section 20. A transmission input shaft 22 mechanically drivingly connects, in a nondisengable manner, the vehicular engine 12 with the transmission 14 while a transmission output shaft 24 is drivingly connected to the vehicular drive wheels as is well known in the prior art.

A central processing unit 16 receives input signals from the main transmission section 20, the auxiliary transmission section 18, the engine 12 and other input devices 26, such as throttle position, gear selection position and like sensors and processes the same in accordance with predetermined logic rules to generate command output signals to actuators provided in the engine and transmission for automatic or semi-automatic operation of transmission system 10. Automatic/semi-automatic mechanical transmission systems and the sensors, actuators and controller associated therewith are known in the prior art and may be appreciated in greater detail by reference to above-mentioned United States Patent Nos. US-A-4 648 290; 4 361 060 and 4 081 065.

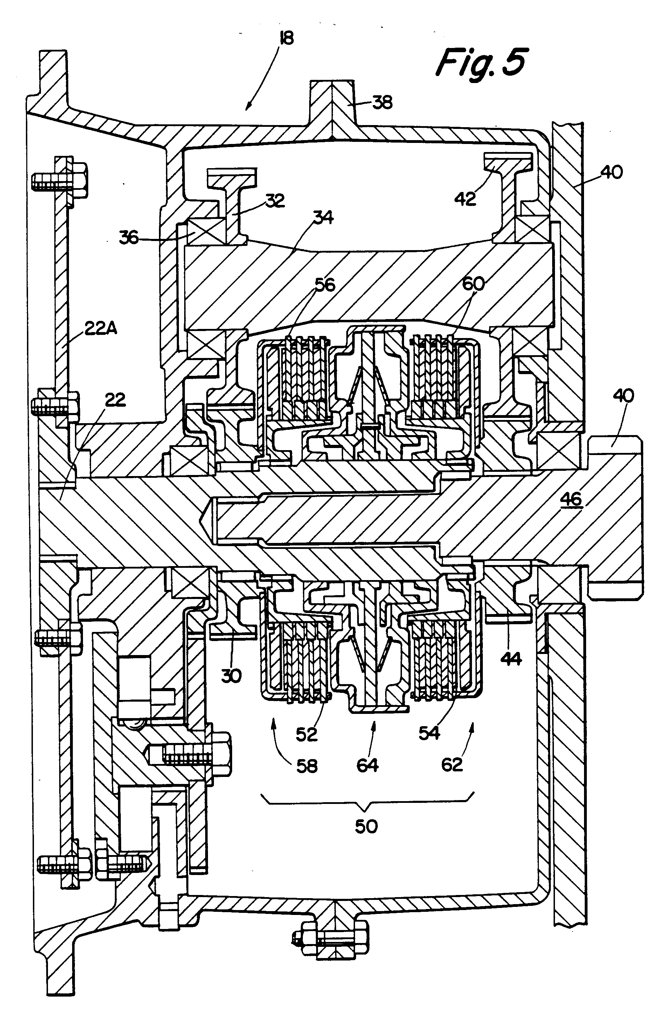

A schematic illustration and a sectional view of the detailed structure of the input auxiliary transmission section 18 may be seen by reference to Figures 3 and 5. Briefly, transmission input shaft 22 is mechanically nondisengagably connected to the vehicular engine. A plate 22A may be fixed to shaft 22 for mounting to the engine flywheel. The transmission input shaft 22 carries an auxiliary section input gear 30 rotationally movable relative thereto which is constantly meshed with auxiliary section countershaft gear 32 carried by auxiliary section countershaft 34. Auxiliary section countershaft 34 is supported by bearings 36 in auxiliary section housing 38 which is preferably attached to and/or integral with main transmission section housing 40. The auxiliary section countershaft 34 also carries a second auxiliary section countershaft gear 42 which is constantly meshed with auxiliary section output gear 44. The auxiliary section output gear 44 is rotatably fixed to auxiliary section output shaft 46 which defines the input to main transmission section 20 and carries the main transmission section input gear 48 fixed thereto. Preferably, main transmission section 20 is a simple transmission of the synchronized transmission type as is well known in the prior art and as may be appreciated in greater detail by reference to above-mentioned United States Patent Nos. US-A-4 432 251; 4 373 403 and 4 018 319.

The auxiliary input transmission section 18 includes a friction clutch assembly 50 having a first position for frictionally drivingly connecting transmission input shaft 22 to the auxiliary transmission output shaft 46 and output gear 44 while allowing free rotation between the input shaft 22 and input gear 30 to provide a one-to-one ratio, or direct drive relationship, between input shaft 22 and auxiliary section output shaft 46. In a second position of clutch assembly 50, input shaft 22 is rotationally disengaged from auxiliary section output shaft 46 and auxiliary output gear 44 and is rotationally coupled to auxiliary section input gear 30 to provide a selectable speed reduction between the auxiliary section output shaft 46 as compared to the rotational speed of input shaft 22. Preferably, as discussed above, the gear reduction obtained in the second position of clutch assembly 50 will be less than the average ratio step of the main transmission section, preferably equal to approximately the square root of the average main transmission section ratio step, whereby auxiliary transmission section 18 will be a splitter type input auxiliary transmission section for main transmission section 20 of compound transmission 14.

The clutch assembly 50 will also have a third disengaged position wherein the input shaft 22 is independently rotatable of the auxiliary section output shaft 46.

Preferably, the central processing unit 16 will be provided with logic rules whereby the clutch assembly 50 may be selectively positioned from the selected one of the first and second position thereof and the third disengaged position allowing the clutch assembly to function in a manner functionally comparable to a vehicular master clutch in providing a break in torque between the vehicle engine and the main transmission section 20. Preferably, to provide adequate vehicle start from stop operation, the clutch will be engaged and disengaged in a controlled modulated manner as set forth in above-mentioned United States Patent No. US-A-4 081 065.

Referring now specifically to the structure of clutch assembly 50, auxiliary section input shaft 22, carries a first set 52 and a second set 54 of clutch discs rotationally fixed thereto, input gear 30 carries a plurality of clutch discs 56 interleaved with clutch discs 52 to define a clutch disc pack 58. Auxiliary section output gear 44 carries a plurality of friction clutch discs 60 for rotation therewith which clutch discs are interleaved with clutch disc 54 to define a second clutch disc pack 62. A three position actuator 64 is provided for engaging disc pack 58 for coupling input shaft 22 to input gear 30, for engaging disc pack 62 for coupling auxiliary section input shaft 22 to auxiliary section output shaft 46 or for maintaining both of the disc packs 58 and 62 in the disengaged positions thereof. Actuator 64 may be mechanical, pneumatic, or the like. Preferably, clutch assembly 50 is enclosed within a housing 38, is liquid cooled and utilizes friction material containing substantially pyrolytic carbon. Wet or liquid cooled friction clutches of this type are known in the prior art and may be seen in greater detail by reference to United States Patent No. US-A-4 291 754.

Of course, gear 30 could be rotationally fixed to shaft 22 and gear 44 rotatable relative to shaft 46 and frictionally coupable thereto.

To lower the rotational inertia of the auxiliary section output shaft 46 to provide easier, quicker and lower energy synchronization of main transmission section 20, a positive clutch device, such as jaw clutch 66 (illustrated in Figure 3 only) is provided in auxiliary output shaft 46 interposed the auxiliary section clutch assembly 50 and the main transmission section input gear 48. Briefly, during a shift transcend in main transmission section 20, the mechanical coupling 66 will be opened to disengage the rearward portion of auxiliary section output shaft 46 from the rotational inertia of the auxiliary section clutch assembly 50. Preferably, with the clutch assembly 50 in the disengaged position, the coupling 66 may be easily re-engaged after achievement of a synchronous engagement of a selected gear in the main transmission section 20 without requiring synchronization of the members thereof due to the relatively low inertia of the forward portion of auxiliary section output shaft 46.

An alternate embodiment of the present invention may be seen by reference to Figures 2 and 3. Briefly, Figure 2 illustrates a manually controlled transmission system 70 utilizing the compound transmission 14 discussed above in connection with Figure 1. Briefly, control of the auxiliary section clutch 50 and, if utilized, a positive disconnect coupling 66, is by means of a controller 72 which is responsive to input signals from the clutch pedal 74 and from the shift selector lever 76 which comprises a shift lever 78 for shifting the main transmission section and the switch 80 for selecting the direct drive or gear reduction ratio of the input auxiliary transmission section 18. Briefly, selector switch 80 will determine which of the clutch packs 58 or 62 is to be selectively engaged or disengaged while the position of clutch pedal 74 will determine the degree of engagement or disengagement of the selected clutch pack. Should mechanical disconnect 66 be utilized with transmission system 70, a sensor may be provided for sensing a gear change in the main transmission section 20 for causing control 72 to cause the coupling 66 to assume the disconnect position thereof.

The shift pattern for transmission system 70 may be seen by reference to Figure 4.

## Claims

1. An input auxiliary transmission system (18) for a compound vehicular transmission (14) system comprising an auxiliary transmission section connected in series between a vehicular prime mover (12) and a change gear mechanical main transmission section (20), said auxiliary section characterized by:
an input shaft (22) non-disengagably mechanically drivingly connected to said vehicular prime mover, an auxiliary section output shaft (46) and a three position friction clutch (50) having a first position for coupling said auxiliary output shaft to said input shaft at a first speed ratio, or second position for coupling said input shaft to said auxiliary section output shaft at a second speed ratio and a third position allowing independent rotation of said input shaft and auxiliary section output shaft ; and a selectively engageable and disengageable disconnect coupling (66) drivingly interposed between said friction clutch (50) and the main transmission section.

2. The input auxiliary transmission system of Claim 1 wherein said disconnect coupling (66) comprises a positive jaw clutch memeber.

3. The input auxiliary transmission system of claim 2 wherein said auxiliary transmission system includes means for sensing operator selection of a desired one of said first speed ratio or said second speed ratio to determine which of said first position or said second position the friction clutch should be positioned.

4. The input auxiliary transmission system of claim 2 or 3 additionally including means for sensing the operator's positioning of a manual clutch pedal to determine the amount of engagement of said friction clutch in said first or second position.

5. The input auxiliary transmission system of claim 2 or 3 or 4 wherein said auxiliary section has an input gear (30) an auxiliary section countershaft (34) assembly having rotationally fixed thereto a first countershaft gear (32) meshed with said input gear and a second countershaft dear (42) meshed with an auxiliary section output gear (44), connected to said auxiliary output shaft (46), drivingly connected to said main transmission section, said output gear fixed to said output shaft, said three position friction clutch in said first position coupling said auxiliary output shaft to said input shaft by connecting auxiliary section output gear (44) to the input shaft at said first speed ratio and in said second position coupling said input shaft to said input gear which transmits power through said first countershaft gear, said countershaft and second countershaft gear to said auxiliary section output gear and output shaft at said second speed ratio.

6. The input auxiliary transmission system of Claim 2 wherein said transmission is a splitter type transmission.

7. The input auxiliary transmission system of Claim 3 or 5 wherein the main transmission section is a synchronized transmission section.

8. The input auxiliary transmission system of Claim 2 wherein said friction clutch is a liquid cooled clutch.

9. The input auxiliary transmission system of Claim 8 where said friction clutch utilizes friction material comprising of pyrolytic carbon.

10. The auxiliary section of Claim 6 where said friction clutch comprises a first clutch disc pack engaged in said first clutch position and a second clutch disc pack engaged in said second clutch position, said transmission systems including means for sensing operator selection of a desired input auxiliary section ratio to determine which of said first and second clutch disc pack is to be selectively engaged and disengaged and for sensing the operator's positioning of a manual clutch pedal to determine the amount of engagement of the selected clutch pack to be engaged and disengaged.

## Patentansprüche

1. Zusatz-Vorschaltgetriebeeinheit (18) für ein Fahrzeugverbundgetriebe (14) mit einer Zusatzgetriebeeinheit, die in Serie zwischen einem Primärfahrzeugantrieb (12) und einer mechanischen Hauptwechselgetriebeeinheit (20) angeordnet ist, gekennzeichnet durch:
eine nicht auskuppelbar mechanisch antriebsmäßig mit dem Primärfahrzeugantrieb verbundene Eingangswelle (22), eine Zusatzgetriebe-Ausgangswelle (46) und eine Reibungskupplung (50) mit drei Stellungen: einer ersten Stellung zum Kuppeln der Zusatzgetriebe-Ausgangswelle mit der Eingangswelle für ein erstes Übersetzungsverhältnis, einer zweiten Stellung zum Kuppeln der Eingangswelle mit der Zusatzgetriebe-Ausgangswelle für ein zweites Übersetzungsverhältnis und einer dritten Stellung, die eine unabhängige Rotation der Eingangswelle gegenüber der Zusatzgetriebe-Ausgangswelle erlaubt; sowie eine wahlweise einrückbare und ausrückbare Trennkupplung (66), die antriebsmäßig zwischen der Reibungskupplung (50) und der Hauptwechselgetriebeeinheit angeordnet ist.

2. Zusatz-Vorschaltgetriebeeinheit nach Anspruch 1, dadurch gekennzeichnet, daß die Trennkupplung (66) ein formschlüssiges Klauenkupplungselement umfaßt.

3. Zusatz-Vorschaltgetriebeeinheit nach Anspruch 2, dadurch gekennzeichnet, daß die Zusatzgetriebeeinheit Mittel zum Erfassen einer vom Fahrer getroffenen gewünschten Auswahl zwischen dem ersten Übersetzungsverhältnis und dem zweiten Übersetzungsverhältnis umfaßt, um festzulegen, in welcher der beiden Stellungen die Reibungskupplung sein sollte.

4. Zusatz-Vorschaltgetriebeeinheit nach Anspruch 2 oder 3, dadurch gekennzeichnet, daß außerdem Mittel zum Erfassen der von dem Fahrer vorgenommenen Einstellung eines von dem Fahrer betätigbaren Kupplungspedals vorgesehen sind, um das Maß des Reibschlusses der Reibungskupplung in der ersten oder der zweiten Stellung zu bestimmen.

5. Zusatz-Vorschaltgetriebeeinheit nach Anspruch 2 oder 3 oder 4, dadurch gekennzeichnet, daß das Zusatzgetriebe ein Eingangszahnrad (30), eine Zusatzgetriebe-Vorgelegewellenanordnung (34), die ein drehfest damit verbundenes erstes Vorgelegewellenzahnrad (32), das mit dem Eingangszahnrad (30) kämmt, sowie ein zweites Vorgelegewellenzahnrad (44) aufweist, das mit einem mit der Zusatzgetriebe-Ausgangswelle verbundenen Zusatzgetriebe-Ausgangszahnrad (44) kämmt, wobei die Zusatzgetriebe-Ausgangswelle antriebsmäßig mit der Hauptgetriebeeinheit verbundenen ist, wobei außerdem das Ausgangszahnrad an der Ausgangswelle befestigt ist, und wobei die Reibungskupplung mit drei Stellungen in der ersten Stellung die Zusatzgetriebe-Ausgangswelle mit der Eingangswelle verbindet, indem das Zusatzgetriebe-Ausgangszahnrad (44) mit der Eingangswelle für das erste Übersetzungsverhältnis gekuppelt wird, und in der zweiten Stellung die Eingangswelle mit dem Eingangszahnrad kuppelt, das die Leistung über das erste Vorgelegewellenzahnrad, die Vorgelegewelle und das zweite Vorgelegewellenzahnrad auf das Zusatzgetriebe-Ausgangszahnrad und die Ausgangswelle für das zweite Übersetzungsverhältnis überträgt.

6. Zusatz-Vorschaltgetriebeeinheit nach Anspruch 2, dadurch gekennzeichnet, daß das Getriebe ein Splittergetriebe ist.

7. Zusatz-Vorschaltgetriebeeinheit nach Anspruch 3 oder 5, dadurch gekennzeichnet, daß die Hauptgetriebeeinheit eine synchronisierte Getriebeeinheit ist.

8. Zusatz-Vorschaltgetriebeeinheit nach Anspruch 2, dadurch gekennzeichnet, daß die Reibungskupplung eine flüssigkeitsgekühlte Kupplung ist.

9. Zusatz-Vorschaltgetriebeeinheit nach Anspruch 8, dadurch gekennzeichnet, daß in der Reibungskupplung ein Reibmaterial mit Pyrokohlenstoff (pyrolytic carbon) verwendet ist.

10. Zusatz-Vorschaltgetriebeeinheit nach Anspruch 6, dadurch gekennzeichnet, daß die Reibungskupplung einen ersten Kupplungsscheibensatz, der in der ersten Kupplungsstellung im Eingriff ist, sowie einen zweiten Kupplungsscheibensatz, der in der zweiten Kupplungsstellung im Eingriff ist, umfaßt, und daß die Getriebeeinheiten Mittel zum Erfassen der vom Fahrer getroffenen gewünschten Auswahl des Übersetzungsverhältnisses der Vorschaltzusatzeinheit, um festzulegen, welcher von den ersten und zweiten Kupplungsscheibensätzen wahlweise eingerückt und ausgerückt sein soll, sowie Mittel zum Erfassen der von dem Fahrer vorgenommenen Stellung eines vom Fahrer betätigbaren Kupplungspedals umfassen, um das Maß des Reibschlusses der gewählten Reibungskupplung, die einzurücken und auszurücken ist, zu bestimmen.

## Revendications

1. Un système de transmission auxiliaire d'entrée (18) pour une transmission compound (14) d'un véhicule, comprenant une unité de transmission auxiliaire reliée en série entre une source d'énergie (12) du véhicule et une unité de transmission principale mécanique à changement de rapport (20), ladite unité auxiliaire étant caractérisée par :
- un arbre d'entrée (22) relié mécaniquement en fonctionnement de façon non débrayable à ladite source d'énergie du véhicule, un arbre de sortie (46) d'unité auxiliaire et un embrayage à friction (50) à trois positions, comportant une première position pour accoupler ledit arbre de sortie d'unité auxiliaire audit arbre d'entrée pour un premier rapport de vitesse, ou une seconde position pour accoupler ledit arbre d'entrée audit arbre de sortie d'unité auxiliaire pour un second rapport de vitesse, ainsi qu'une troisième position permettant une rotation indépendante dudit arbre d'entrée et dudit arbre de sortie d'unité auxiliaire ; et un embrayage de désaccouplement (66) sélectivement embrayable et débrayable et interposé fonctionnellement entre ledit embrayage à friction (50) et ladite unité de transmission principale.

2. Le système de transmission auxiliaire d'entrée selon la revendication 1, dans lequel ledit embrayage de désaccouplement (66) comprend un élément d'embrayage à mâchoires positif.

3. Le système de transmission auxiliaire d'entrée selon la revendication 2, dans lequel ledit système de transmission auxiliaire comprend des moyens pour détecter une sélection par l'opérateur d'un rapport désiré parmi ledit premier rapport ou ledit second rapport afin de déterminer dans laquelle desdites première et seconde positions l'embrayage à friction devrait être positionné.

4. Le système de transmission auxiliaire d'entrée selon la revendication 2 ou 3, comprenant additionnellement des moyens pour détecter la position prise par une pédale manuelle d'embrayage sous l'action de l'opérateur afin de déterminer le degré d'engagement dudit embrayage à friction dans ladite première ou ladite seconde position.

5. Le système de transmission auxiliaire d'entrée selon la revendication 2 ou 3 ou 4, dans lequel ladite unité auxiliaire comporte un pignon d'entrée (30), un arbre de renvoi (34) sur lequel est fixé un premier pignon d'arbre de renvoi (32) en prise avec ledit pignon d'entrée et un second pignon d'arbre de renvoi (42) en prise avec un pignon de sortie (44) de l'unité auxiliaire, relié audit arbre de sortie (46) d'unité auxiliaire, relié fonctionnellement à ladite unité de transmission principale, ledit pignon de sortie étant fixé sur ledit arbre de sortie, ledit embrayage à friction à trois positions assurant, dans ladite première position, l'accouplement dudit arbre de sortie d'unité auxiliaire avec ledit arbre d'entrée en reliant le pignon de sortie (44) d'unité auxiliaire avec l'arbre d'entrée pour ledit premier rapport et, dans ladite seconde position, l'accouplement dudit arbre d'entrée avec ledit pignon d'entrée qui transmet de l'énergie par l'intermédiaire dudit premier pignon d'arbre de renvoi, dudit arbre de renvoi et dudit second pignon d'arbre de renvoi audit pignon de sortie d'unité auxiliaire et à l'arbre de sortie pour ledit second rapport.

6. Le système de transmission auxiliaire d'entrée selon la revendication 2, dans lequel ladite transmission est une transmission du type diviseur.

7. Le système de transmission auxiliaire d'entrée selon la revendication 3 ou 5, dans lequel ladite unité de transmission principale est une unité de transmission synchronisée.

8. Le système de transmission auxiliaire d'entrée selon la revendication 2, dans lequel ledit embrayage à friction est un embrayage refroidi par liquide.

9. Le système de transmission auxiliaire d'entrée selon la revendication 8, dans lequel ledit embrayage à friction utilise un matériau de friction se composant de carbone pyrolytique.

10. L'unité auxiliaire selon la revendication 6, où ledit embrayage à friction comprend un premier groupe de disques d'embrayage embrayés dans ladite première position de l'embrayage ainsi qu'un second groupe de disques d'embrayage embrayés dans ladite seconde position d'embrayage, ledit système de transmission comprenant des moyens pour détecter une sélection par l'opérateur d'un rapport désiré pour l'unité auxiliaire d'entrée afin de déterminer celui desdits premiers seconds groupes de disques d'embrayage qui doit être sélectivement embrayé et débrayé et pour détecter la position prise par la pédale manuelle d'embrayage sous l'action de l'opérateur afin de déterminer le degré d'embrayage du groupe de disques sélectionné à embrayer ou à débrayer.
